# EUROPÄISCHE PATENTANMELDUNG

(11) **EP 1 065 011 A1**
(43) Veröffentlichungstag der Anmeldung: **03.01.2001**
(21) Anmeldenummer: 00113425.3
(22) Anmeldetag: 24.06.2000
(51) Int. Cl.: B08B 5/04, B08B 7/02, B60P 3/14, B08B 7/00

(54) **Vorrichtung zum Reinigen von Matratzen**

(30) Priorität: 01.07.1999 DE 29911501 U
(71) Anmelder: Gäckle, Achim, 74679 Weissbach (DE)
(72) Erfinder: Gäckle, Achim, 74679 Weissbach (DE)
(74) Vertreter: Müller, Hans, Dipl.-Ing.

(57) **Zusammenfassung**

Eine Vorrichtung (74) zum Reinigen von Matratzen besitzt Gerätevorrichtungen (60, 62, 64) zur Behandlung von Matratzen (18). Bei dieser Behandlung liegen die Matratzen auf einer Auflagefläche (20) auf. Die Vorrichtung kann in Form eines transportablen Gerätes, oder auch in einem PKW-Anhänger (76) integriert, jeweils vorhanden sein.

## Beschreibung

### TECHNISCHES GEBIET

Die Erfindung betrifft eine Vorrichtung, mit der Matratzen von Staub und Schädlingen, wie insbesondere von Hausstaubmilben, gereinigt werden können.

### STAND DER TECHNIK

Aus der DE 43 44 737 C2 ist ein Verfahren und eine Vorrichtung zur Reinigung von textilen Gegenständen, wie beispielsweise Teppichen, Polstermöbeln, Gardinen, Matratzen oder dergleichen bekannt. Die vorbekannte Vorrichtung wird glockenartig von oben auf die zu reinigende Matratze aufgesetzt. Die Vorrichtung enthält eine Saugvorrichtung, die ähnlich wie ein Staubsauger funktioniert. Mit dieser Saugvorrichtung können Schmutzpartikel und abgestorbene Hausstaubmilben oder sonstige Schädlinge aus der Matratze nach oben herausgesaugt werden. Innerhalb des glockenartigen Gehäuses ist eine Platte vorhanden, die von oben auf der Matratze aufliegt. Diese Platte kann in Schwingungen versetzt werden, die sich auf den Matratzenkörper übertragen. Durch diese Schwingungen sollen die in der Matratze vorhandenen Schmutzpartikel und abgestorbene Hausstaubmilben verkleinert werden, so dass sie anschließend besser aus der Matratze herausgesaugt werden können. Diese Vorrichtung ist aufgrund ihrer voluminösen und schweren Ausbildung umständlich zu handhaben.

### DARSTELLUNG DER ERFINDUNG

Ausgehend von diesem vorbekannten Stand der Technik liegt der Erfindung die Aufgabe zugrunde, eine verbesserte Vorrichtung zum Reinigen von Matratzen anzugeben.

Diese Erfindung ist durch die Merkmale des Hauptanspruchs gegeben. Die erfindungsgemäße Vorrichtung enthält Gerätevorrichtungen, mit denen die Matratze in an sich bekannter Weise verschiedenen Behandlungsstufen unterworfen werden kann. Zusätzlich enthält die Vorrichtung eine Auflagefläche, auf der die Matratze während ihres Reinigungsvorgangs aufliegen kann. Damit braucht die aufgrund ihrer verschiedenen Gerätevorrichtungen relativ voluminöse und schwere Reinigungsvorrichtung nicht auf eine Matratze aufgesetzt und über die Matratze hin und her geschoben zu werden, sondern es kann umgekehrt die im Verhältnis zur Reinigungsvorrichtung wesentlich leichtere Matratze in die Reinigungsvorrichtung hineingeschoben beziehungsweise hindurchgeschoben werden.

Die Handhabung der Reinigungsvorrichtung kann dadurch noch erleichtert werden, dass ihre Auflagefläche zumindest teilweise als Fördereinrichtung ausgebildet wird. Die zu reinigende Matratze kann dann leicht und einfach durch die Reinigungsvorrichtung hindurchtransportiert werden. Damit lässt sich der Reinigungsvorgang von einer Bedienperson ohne große körperliche Anstrengung durchführen. Als Fördereinrichtungen können Förderband, Förderschlitten, Rollenbahn oder dergleichen vorgesehen werden.

Durch das Anordnen von seitlichen Abweisern neben der Auflagefläche kann ein seitliches Auswandern der durch die Reinigungsvorrichtung hindurchbewegten Matratze verhindert werden. Als ausreichend hat es sich herausgestellt, lediglich den beziehungsweise die Abweiser auf einer Seite quer zur Förderrichtung verstellbar und darüber hinaus gegebenenfalls elastisch nachgebend auszubilden. Über die Verstellung können unterschiedliche Breitenabmessungen der zu reinigenden Matratze berücksichtigt werden. Eine elastische Nachgiebigkeit ermöglicht eine mechanisch besonders schonende Berührung zwischen Matratze und Abweiser.

Die Gerätevorrichtungen, die zur reinigenden Behandlung der Matratze in der Vorrichtung vorgesehen sind, sind vorzugsweise relativ zur Auflagefläche verstellbar ausgebildet. Diese Gerätevorrichtungen können, wie in einem speziellen Ausführungsbeispiel angegeben ist, zumindest einen Ultraviolett-Strahler, einen Klopf-Staubsauger, zumindest eine Spritzeinrichtung zur Desinfektion und für die Behandlung mit spezifischen Mitteln, die die Vermehrung von Milben verhindern, vorzugsweise Neembaum-Öl, sowie zumindest eine Heißluftdüse (60 - 120 °C, vorzugsweise 90 °C) enthalten. Mit Hilfe solcher einander nachgeschalteter Behandlungsstufen ist eine optimale hygienische Reinigung und eine nachhaltige Desinfektion einer Matratze von Staub und insbesondere Hausstaubmilben möglich.

Durch Anordnen von mehreren gleichartigen Sorten von Gerätevorrichtungen lässt sich ein sparsamer Einsatz der jeweils vorhandenen Gerätevorrichtungen ermöglichen. So brauchen bei relativ schmalen Matratzen nicht alle sondern nur ein Teil der jeweils vorhandenen Sorte von Gerätevorrichtungen eingesetzt zu werden. Nähere Erläuterungen dazu sind in der Figurenbeschreibung zu den Ausführungsbeispielen angegeben.

Bei den in der Zeichnung dargestellten Ausführungsbeispielen enthalten die dort dargestellten Reinigungsvorrichtungen jeweils ein Durchlaufgehäuse mit einer Eintrittsöffnung und einer Austrittsöffnung für die jeweils durch die Vorrichtung hindurchzuführenden Matratzen. Dieses Gehäuse kann auf einem Rollengestell aufgelagert sein, das an dem Gehäuse klappbar beziehungsweise schwenkbar oder auf sonstige Weise befestigt sein kann. Damit kann die erfindungsgemäße Reinigungsvorrichtung als mobile Einheit in einem Fahrzeug oder auch in einem Fahrzeuganhänger beliebig transportiert werden. Dabei kann die Reinigungsvorrichtung aus dem Fahrzeug beziehungsweise dem Fahrzeuganhänger herausgehoben und dann zu der oder den zu reinigenden Matratzen hingefahren werden. Es ist darüber hinaus auch möglich, die Matratzen zu der Reinigungsvorrichtung hinzutragen und dann durch die Reinigungsvorrichtung nacheinander - vorzugsweise selbsttätig - hindurch zu bewegen. Näheres zu entsprechenden Ausführungsformen der Erfindung ist in der Zeichnung angegeben.

Ebenfalls ist der Zeichnung die Möglichkeit zu entnehmen, ein Regenschutzdach - beispielsweise im Zusammenhang mit einer in einem Fahrzeuganhänger montierten Reinigungsvorrichtung - vorzusehen. Der Anhänger, in dem die Reinigungsvorrichtung gleichsam integriert vorhanden sein kann, ist dann gleichzeitig mit einer Wetterschutzeinrichtung für die zu reinigenden Matratzen und gegebenenfalls gleichzeitig für die die Matratze handhabenden Personen ausgestattet.

Weitere Ausführungsformen und Vorteile der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine schematische Seitenansicht einer ersten Ausführungsform einer Reinigungsvorrichtung, die als mobile Anlage zum Transport in einem Fahrzeug vorgesehen ist,
- Fig. 2: eine Draufsicht auf die Anlage nach Fig. 1,
- Fig. 3: eine Rückansicht der Anlage nach Fig. 1,
- Fig. 4: einen Längsschnitt durch die Reinigungsvorrichtung nach Fig.1,
- Fig. 5: eine Seitenansicht der Reinigungsvorrichtung nach Fig. 4 gemäß Linien 5 - 5 in Fig. 4,
- Fig. 6: eine perspektivische Darstellung einer zweiten, in einen Anhänger integrierten Reinigungsvorrichtung nach der Erfindung
- Fig. 7: eine teilweise geschnittene Draufsicht auf die Reinigungsvorrichtung nach Fig. 6,
- Fig. 8: einen Längsschnitt einer weiteren Reinigungsvorrichtung nach der Erfindung.

### WEGE ZUM AUSFÜHREN DER ERFINDUNG

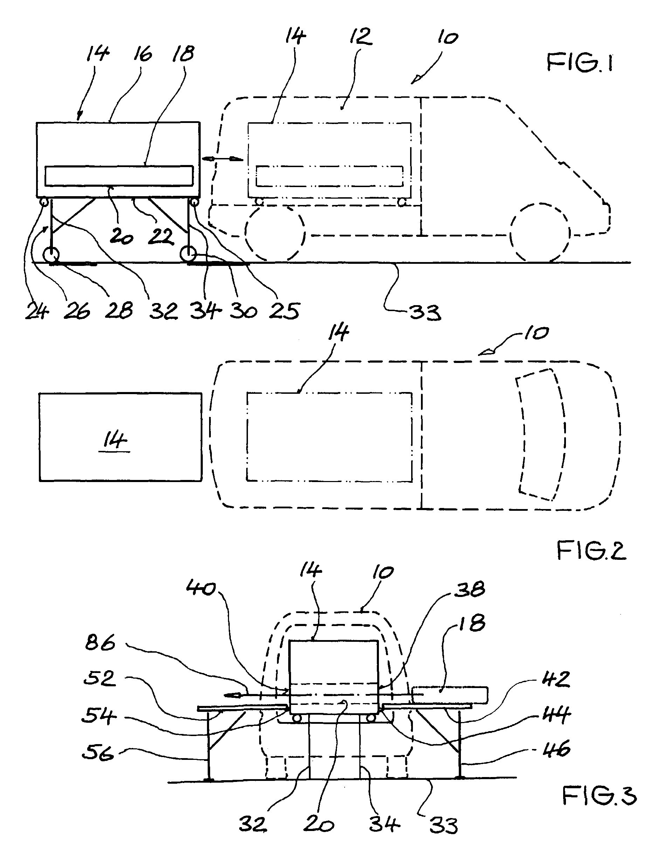

Ein Straßenfahrzeug, wie beispielsweise ein Personenkraftwagen 10, besitzt einen Kofferraum 12. In diesem Kofferraum findet unter anderem eine Reinigungsvorrichtung 14 Platz. Diese Vorrichtung 14 besitzt ein kastenförmiges Gehäuse 16, in dem eine Matratze 18 gereinigt werden kann. Die Matratze 18 liegt dabei auf einer tischartigen Auflagefläche 20 auf (Fig. 1).

An dem Boden 22 des Gehäuses 16 sind endseitig jeweils Rollen 24, 25 angebracht. Außerdem ist am Boden 22 ein Rollengestell 26 befestigt. Dieses Rollengestell 26 besitzt ausklappbare, mit Fahrrollen 28, 30 ausgestattete Stützen 32 beziehungsweise 34.

Das Gehäuse 16 kann mit eingeklapptem Rollengestell 26 in den Kofferraum 12 eingelagert beziehungsweise aus demselben herausgezogen werden. Beim Bewegen des Gehäuses 16 innerhalb des Kofferraums 12 rollt das Gehäuse 16 auf den Rollen 24, 25. Statt der Rollen 24, 25 könnten auch Gleitschienen oder vergleichbare Gleitvorrichtungen am Gehäuse 16 oder alternativ beziehungsweise zusätzlich dazu am Kofferraum 12 vorgesehen werden. Die Reinigungsvorrichtung 14 lässt sich dadurch auf körperlich leichte Weise aus dem Kofferraum 12 herausziehen beziehungsweise in denselben hineinschieben.

Außerhalb des Personenkraftwagens 10 kann das Gehäuse 16 mit herausgeklapptem Rollengestell 26 auf einem Untergrund 33 mittels der Fahrrollen 28, 30 problemlos hin und her geschoben werden. Die Reinigungsvorrichtung 14 kann auf diese Weise beispielsweise in ein Gebäude hineintransportiert werden. Auf diese Weise brauchen die in der Reinigungsvorrichtung 14 zu reinigenden Matratzen nicht zu dem auf der Straße stehenden Personenkraftwagen 10 hingetragen werden; vielmehr kann die Reinigungsvorrichtung 14 gleichsam zu den Matratzen hintransportiert werden.

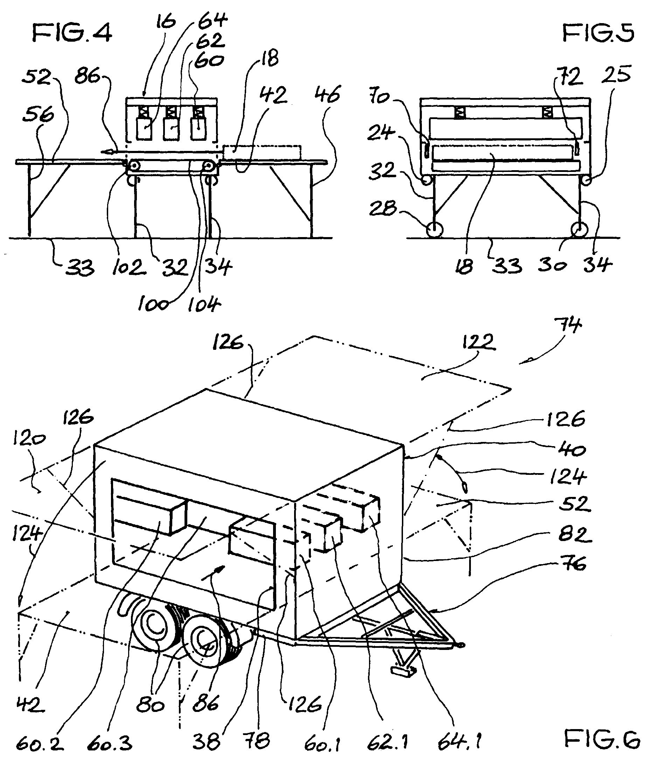

Das Gehäuse 16 besitzt eine vordere Eintrittsöffnung 38 sowie eine hintere Austrittsöffnung 40 (Fig. 3). Durch die Eintrittsöffnung 38 kann die jeweils zu reinigende Matratze 18 in die Reinigungsvorrichtung 14 hineingeschoben werden. Durch die Austrittsöffnung 40 wandert die Matratze 18 aus der Reinigungsvorrichtung 14 heraus. Beim Durchwandern des Gehäuses 16 ruht die Matratze 18 auf der Auflagefläche 20 auf, die auch als Rollenbahn ausgebildet sein kann.

Vor der Eintrittsöffnung 38 ist ein Tisch 42 an dem Gehäuse 16 über ein Gelenk 44 befestigt. Der Tisch 42 kann bei Betrieb der Reinigungsvorrichtung 14 aus seiner an die Eintrittsöffnung 38 angeschwenkten Lage um etwa 90° (Grad) heruntergeklappt werden, wie dies in Fig. 3 dargestellt ist. Der Tisch 42 ruht dann auf Klappfüßen 46 auf einem Untergrund 33 auf. Die Matratze 18 wird auf den Tisch 42 gelegt und kann dann durch die Eintrittsöffnung 38 in das Gehäuse 16 hineingeschoben werden.

Auf der gegenüberliegenden Seite des Gehäuses 16, auf der die Austrittsöffnung 40 vorhanden ist, ist ebenfalls ein Tisch 52 über ein Gelenk 54 klappbar beziehungsweise schwenkbar am Gehäuse 16 befestigt. Auch dieser Tisch 52 besitzt Klappfüße 56, die bei der Darstellung gemäß Fig. 3 vom Tisch nach unten ausgeklappt sind. Ebenso wie der Tisch 42 kann auch der Tisch 52 somit auf dem Untergrund 33 standsicher aufruhen.

Beim Durchwandern des Gehäuses 16 schiebt sich die Matratze 18 nach Verlassen des Gehäuses 16 auf diesen Tisch 52, von dem die Matratze 18 gereinigt weggenommen werden kann.

Innerhalb des Gehäuses 16 sind in Transportrichtung 86 der Matratze 18 ein Ultraviolett-Strahler 60, ein Staubsauger 62 und eine Sprüheinrichtung 64 zum Versprühen von für Menschen ungefährlichen Schädlingsbekämpfungs- und Desinfektionsmitteln hintereinander angeordnet. Diese von oben hängend angeordneten Gerätevorrichtungen sind höhenmäßig verstellbar befestigt. Die drei Gerätevorrichtungen, der Ultraviolett-Strahler 60, der Staubsauger 62 und die Sprüheinrichtung 64 werden durch in der Zeichnung nicht dargestellte Lichtschranken so gesteuert, dass sie sich abhängig von der Dicke der Matratze automatisch in der jeweils erforderlichen Höhenlage einstellen. Außerdem kann über beispielsweise Lichtschranken oder vergleichbare Sensoreinrichtungen das Starten dieser Gerätevorrichtungen 60, 62, 64 ausgelöst gegebenfalls ihre Intensität geregelt oder auch ihr Ausschalten bewirkt werden.

Innerhalb des Gehäuses 16 sind seitliche Abweiser 70, 72 angeordnet, die eine seitliche Begrenzung für die durch das Gehäuse 16 hindurchgeführte Matratze 18 darstellen. Der gegenseitige Abstand der beiden Abweiser 70, 72 entspricht der Breitenabmessung der Matratze 18. Der gegenseitige Abstand der beiden Abweiser 70, 72 kann verändert werden, um unterschiedlich breite Matratzen entsprechend seitlich halten zu können. Dazu ist einer der Abweiser 70, 72 in Querrichtung verstellbar ausgebildet. Einer der beiden Abweiser 70, 72 ist darüber hinaus elastisch nachgiebig gelagert. Er könnte auch in sich nachgiebig ausgebildet werden. Dadurch kann eine schonende seitliche Führung der Matratze 18 innerhalb des Gehäuses 16 ermöglicht werden.

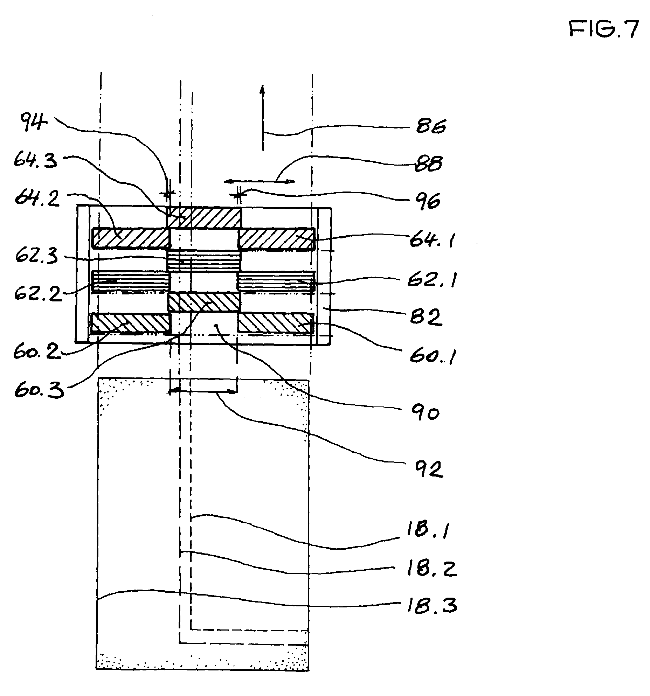

In Fig. 6 ist eine Reinigungsvorrichtung 74 dargestellt, die integraler Bestandteil eines Anhängers 76 ist. So ist auf dem Chassis 78 des Anhängers 76, das eine Doppelachse 80 aufweist, ein Gehäuse 82 montiert, das dem Gehäuse 16 weitestgehend entspricht.

Im Inneren des Gehäuses 82 sind drei Ultraviolett-Strahler 60.1, 60.2, 60.3, drei Staubsauger 62.1, 62.2 und 62.3 sowie drei Sprüheinrichtungen 64.1, 64.2 und 64.3 in Transportrichtung 86 hintereinander angeordnet (Fig. 7).

Die beiden äußeren Gerätevorrichtungen 60.1, 60.2 beziehungsweise 62.1 und 62.2 sowie 64.1 und 64.2 sind in Querrichtung 88 voneinander beabstandet und in den seitlichen äußeren Bereichen des Gehäuses 82 angeordnet. Im mittleren Bereich 90 sind die jeweils mittleren Gerätevorrichtungen 60.3, 62.3 und 64.3 ebenfalls in Transportrichtung 86 hintereinander angeordnet. Die mittleren Gerätevorrichtungen 60.3, 62.3, 64.3 sind breiter als der gegenseitige Abstand 92 der jeweils äußeren Gerätevorrichtungen, so dass eine Überlappung 94, 96 in Querrichtung 88 geschaffen wird. Zwischen den beiden Ultraviolett-Strahlern 60.1 und 60.2 beziehungsweise 60.2 und 60.3 ist kein Längsbereich vorhanden, der nicht durch die entsprechenden Gerätevorrichtungen abgedeckt werden könnte.

Die gesplittete Anordnung von Gerätevorrichtungen 60 beziehungsweise 62 und 64 ermöglicht es, unterschiedlich breite Matratzen 18.1, 18.2 oder 18.3 auf betriebswirtschaftlich sparsame Weise optimal mit der Reinigungsvorrichtung 74 zu behandeln. Bei den Matratzen 18.1 und 18.2 sind jeweils nur zwei Drittel der vorhandenen Gerätevorrichtungen, also die Ultraviolett-Strahler 60.1 und 60.3, die Staubsauger 62.1 und 62.3 sowie die Sprüheinrichtungen 64.1 und 64.3 in Betrieb. Erst bei der überbreiten Matratze 18.3 sind zusätzlich auch noch die jeweils dritten Gerätevorrichtungen, nämlich der Ultraviolett-Strahler 60.2, der Staubsauger 62.2 und die Sprüheinrichtung 64.2 in Betrieb.

Bei der Reinigungsvorrichtung 14 ist innerhalb des Gehäuses 16 über endseitig angeordnete Rollen 102, 104 ein endlos umlaufendes Förderband 100 vorhanden (Fig. 4). Mittels dieses Förderbandes 100 können Matratzen 18 durch die Reinigungsvorrichtung und damit durch das Gehäuse 16 selbsttätig hindurchgeführt werden. Die Matratzen liegen dabei auf dem oberen Trumm dieses Förderbandes 100 auf. Ein derartiges Förderband könnte auch in dem Gehäuse 82 des Anhängers 76 angeordnet beziehungsweise ausgebildet sein. Durch die vorstehend zum Ansteuern der Gerätevorrichtungen erwähnten Sensoreinrichtungen oder durch sonstige Sensoreinrichtungen könnte auch das Förderband 100 automatisch angesteuert werden.

Bei dem Gehäuse 82 sind seitliche Dachausbildungen vorhanden, die einen Witterungsschutz oder insbesondere einen Regenschutz bilden. Ein derartiges Regenschutzdach 120 beziehungsweise 122 ist vor der Eintrittsöffnung 38 beziehungsweise Austrittsöffnung 40 schwenkbar (Doppelpfeil 124) am Gehäuse 82 befestigt. Im hochgeklappten Zustand, der in Fig. 6 strichpunktiert dargestellt ist, sind die beiden Dächer 120, 122 über Streben 126 zug- und druckfest an dem Gehäuse 82 befestigt.

Im unteren Bereich des Gehäuses 82 ist, ähnlich wie bei dem Gehäuse 16, vor der Eintrittsöffnung 38 und der Austrittsöffnung 40 ein klappbarer Tisch 42 beziehungsweise 52 vorhanden.

Statt der Ausbildung des Anhängers 76 als Reinigungsvorrichtung 74 kann eine Reinigungsvorrichtung, wie beispielsweise die Reinigungsvorrichtung 14 als selbständiges Bauteil in einem Anhänger transportiert werden. Dies hat den Vorteil, dass als Zugmaschine ein auch keinen ausreichend großen Kofferraum aufweisender Personenkraftwagen benutzt werden kann.

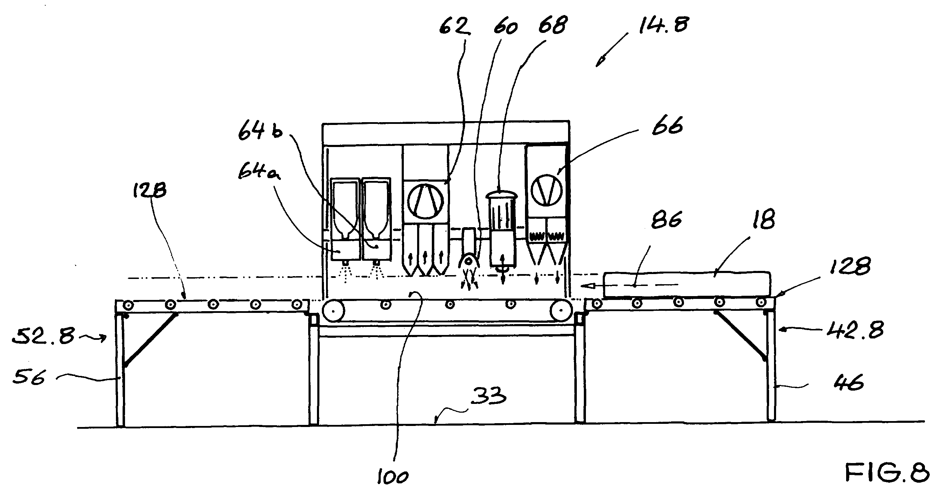

In Fig. 8 ist eine weitere Reinigungsvorrichtung 14.8 dargestellt, die sich von der vorhergehenden Ausführungsform 14 insbesondere dadurch unterscheidet, dass die in Transportrichtung 86 vor und hinter dem Gehäuse 16 angeordneten Tische 42.8 und 52.8 mit einer Auflagefläche in Form einer Rollenbahn 128 ausgestattet sind. Matratzen 18 lassen sich dadurch besonders komfortabel von dem in Fig. 8 rechten Tisch 42.8 in das Gehäuse 16 hineinschieben. Entsprechendes gilt für den in Fig. 8 links gezeichneten Tisch 52.8. Nach Durchwandern des Gehäuses 16 wird die Matratze 18 von dem im Inneren des Gehäuses 16 vorhandenen Förderband 100 leicht auf den in Fig. 8 links gezeichneten Tisch 52.8 heraufgerollt.

In der Reinigungsvorrichtung 14.8 sind neben UV-Strahler 60, Staubsauger 62 und Sprüheinrichtungen 64 noch in Transportrichtung 86 vorgelagerte Luftduschen 66 und Klopfeinrichtungen 68 angeordnet. Aus den Luftduschen 66 tritt die Luft mit etwa 70 bis 120 Grad, vorzugsweise mit etwa 90 Grad aus. Die austretende Luft könnte auch ozonhaltige Luft sein und damit oxidierende und damit desinfizierende Wirkung genutzt werden. Die Sprüheinrichtung 64a versprüht ein Desinfektionsmittel zur Desinfektion und Milbenbekämpfung und die Sprüheinrichtung 64b ein bakteriostatisches Mittel wie z.B. das sogenannte Milbenöl. Auch könnte eine Mikrowelle angeordnet werden, um Matratzen einer Mikrowellenbehandlung unterwerfen zu können. Die verschiedenen Gerätevorrichtungen sind in ihrer kombinatorischen Wirkung äußerst hilfreich bei der perfekten Reinigung von Matratzen.

Bei den vorstehend beschriebenen Ausführungsformen von Reinigungsvorrichtungen werden die Matratzen 18 flachliegend behandelt. Es ist darüberhinaus auch möglich, die Matratzen stehend zu transportieren. Es können die Matratzen auch gleichzeitig von zwei Seiten reinigungsmäßig behandelt werden. Die Matratze kann dabei auch mit ihrer langen Schmalseite oder mit ihrer demgegenüber kürzeren Stirnseite auf der jeweils vorhandenen Auflagefläche der Reinigungsvorrichtung aufruhen.

Die Abmessungen der Reinigungsvorrichtung sind abhängig von der maximalen Größe der zu reinigenden Matratzen sowie von der Art und Weise, wie Matratzen durch die Reinigungsvorrichtung und damit durch ihr Gehäuse hindurchgeschoben werden sollen, ob liegend oder stehend, ob in ihrer Längsrichtung oder Querrichtung.

## Patentansprüche

1. Vorrichtung zum Reinigen von Matratzen,
- mit Gerätevorrichtungen (60, 62, 64, 66, 68) zur Behandlung von Matratzen (18),
**gekennzeichnet durch**
- eine Auflagefläche (20) für die zu reinigenden Matratzen (18).

2. Vorrichtung nach Anspruch 1,
**dadurch gekennzeichnet**, dass
- die Auflagefläche (20) zumindest teilweise an den Gerätevorrichtungen (60, 62, 64, 66, 68) vorbeiführbar ist.

3. Vorrichtung nach Anspruch 2,
**dadurch gekennzeichnet**, dass
- die Auflagefläche (20) zumindest teilweise als Förderband (100) und/oder Rollenbahn (128) vorhanden ist.

4. Vorrichtung nach einem der vorstehenden Ansprüche,
**dadurch gekennzeichnet**, dass
- seitliche Abweiser (70, 72) im Bereich der Auflagefläche (20, 100) vorhanden sind.

5. Vorrichtung nach einem der vorstehenden Ansprüche,
**dadurch gekennzeichnet**, dass
- zumindest ein Teil der Abweiser (70, 72) in sich nachgiebig und/oder in Querrichtung (88), quer zur Transportrichtung (86) der Matratzen (18), verstellbar ist.

6. Vorrichtung nach einem der vorstehenden Ansprüche,
**dadurch gekennzeichnet**, dass
- die Gerätevorrichtungen (60, 62, 64, 66, 68) relativ zur Auflagefläche (20, 100) höhenmäßig verstellbar sind.

7. Vorrichtung nach einem der vorstehenden Ansprüche,
**dadurch gekennzeichnet**, dass
- die Gerätevorrichtungen enthalten
-- zumindest einen Ultraviolett-Strahler (60) und/oder
-- zumindest einen Staubsauger (62) und/oder
-- zumindest eine Sprüheinrichtung (64).

8. Vorrichtung nach einem der vorstehenden Ansprüche,
**dadurch gekennzeichnet**, dass
- die Gerätevorrichtungen enthalten
-- zumindest eine Luftdusche (66) und/oder
-- zumindest eine Klopfeinrichtung (68).

9. Vorrichtung nach Anspruch 8,
**dadurch gekennzeichnet**, dass
- die aus der Luftdusche (68) austretende Luft eine Temperatur von etwa 70° bis 120° (Grad), insbesondere von 90° (Grad) besitzt.

10. Vorrichtung nach Anspruch 8,
**dadurch gekennzeichnet**, dass
- die aus der Luftdusche (68) austretende Luft ozonhaltig ist.

11. Vorrichtung nach einem der vorstehenden Ansprüche,
**dadurch gekennzeichnet**, dass
- die Gerätevorrichtungen enthalten
-- zumindest ein Mikrowellengerät und/oder
-- zumindest eine Klopfeinrichtung (68).

12. Vorrichtung nach einem der Ansprüche 8 bis 11,
**dadurch gekennzeichnet**, dass
- jeweils eine Sorte der Gerätevorrichtungen zumindest in Gestalt von zumindest zwei Geräten (60.1, 60.2, 60.3 beziehungsweise 62.1, 62.2, 62.3 beziehungsweise 64.1, 64.2, 64.3 beziehungsweise 66 beziehungsweise 68) vorhanden ist,
- die Geräte in Transportrichtung (86) in etwa nebeneinander vorhanden sind.

13. Vorrichtung nach Anspruch 12,
**dadurch gekennzeichnet**, dass
- Geräte der gleichen Sorte (60, 62, 64, 66, 68) so versetzt zueinander vorhanden sind, dass in Querrichtung (88) sich überlappende Behandlungsbereiche (90) herstellbar sind.

14. Vorrichtung nach einem der vorstehenden Ansprüche,
**dadurch gekennzeichnet**, dass
- ein Durchlauf-Gehäuse (16, 82) für die zu reinigenden Matratzen (18) vorhanden ist.

15. Vorrichtung nach Anspruch 14,
**dadurch gekennzeichnet**, dass
- das Gehäuse (16, 82) auf einem Rollengestell (26) auflagerbar ist.

16. Vorrichtung nach Anspruch 15,
**dadurch gekennzeichnet**, dass
- das Rollengestell (26) an dem Gehäuse (16, 82) insbesondere klapp und/oder schwenkbar befestigt ist.

17. Vorrichtung nach einem der Ansprüche 14 bis 16,
**dadurch gekennzeichnet**, dass
- Rollen (24, 25) am Durchlauf-Gehäuse (16, 82) befestigt sind.

18. Vorrichtung nach einem der Ansprüche 14 bis 17,
**dadurch gekennzeichnet**, dass
- Wandteile (42, 52) am Gehäuse (16, 82) schwenkbar so vorhanden sind, dass sie im eingeklappten Zustand Eintritts- beziehungsweise Austrittsöffnung (38, 40) des Durchlauf-Gehäuses (16, 82) verschließen und dass sie im ausgeklappten Zustand zumindest teilweise als Verlängerung der Auflagefläche (20, 100) vorhanden sind.

19. Vorrichtung nach Anspruch 18,
**dadurch gekennzeichnet**, dass
- Füße (46, 56) an den Wandteilen (42, 52) klappbar befestigt sind.

20. Vorrichtung nach einem der vorstehenden Ansprüche,
**dadurch gekennzeichnet**, dass
- sie als integraler Bestandteil eines LKW-Anhängers (76) ausgebildet ist,
- der Aufbau des Anhängers (76) als Durchlauf-Gehäuse (82) ausgebildet ist,
- die beiden gegenüberliegenden Seitenwände des Anhängers (76) als schwenkbar Wandteile (42, 52) ausgebildet sind, die in ihren Einstellungen die Eintritts- beziehungsweise Austrittsöffnung (38, 40) des Gehäuses (82) verschließen und die in ihren anderen Stellungen als Verlängerung der Auflagefläche (20, 100) vorhanden sind.

21. Vorrichtung nach einem der vorstehenden Ansprüche,
**dadurch gekennzeichnet**, dass
- ein Regenschutzdach (120, 122) im Bereich der Eintritts- und/oder Austrittsöffnung (38, 40) vorhanden ist.

22. Vorrichtung nach Anspruch 21,
**dadurch gekennzeichnet**, dass
- das Dach (120, 122) klappbar befestigt ist.

23. Vorrichtung nach Anspruch 21,
**dadurch gekennzeichnet**, dass
- das Dach (120, 122) als Markise ausgebildet ist.

24. Vorrichtung nach einem der vorstehenden Ansprüche,
**dadurch gekennzeichnet**, dass
- die Vorrichtung programmgesteuert betreibbar ist.

25. Vorrichtung nach Anspruch 18,
**dadurch gekennzeichnet**, dass
- Sensoreinrichtungen zum Ansteuern der Gerate (60, 62, 64, 66, 68) und/oder des Förderbandes (100) vorhanden sind.
